# EUROPEAN PATENT APPLICATION

(11) **EP 4 279 878 A1**
(43) Date of publication of application: **22.11.2023**
(21) Application number: 22174321.4
(22) Date of filing: 19.05.2022
(51) Int. Cl.: G01F 1/05

(54) **A DEVICE FOR FLOW MEASUREMENT**

(71) Applicant: IMI Hydronic Engineering International SA, 1262 Eysins (CH)
(72) Inventor: JILDEROS, Daniel, 507 34 Brämhult (SE); KROGH, Martin, 524 42 Ljung (SE)
(74) Representative: Zacco Sweden AB

(57) **Abstract**

A device for flow measurement, comprising a housing, a measuring section provided with a first window area and a second window area that allow a light beam to pass from outside of and through the first window area, into and across the interior of the housing, and then out through the second window area. The device comprises upstream central body portion and a downstream central body portion. The downstream central body portion causes the fluid to encircle the downstream central body portion as the fluid flows from the measuring section to the outlet. The two central body portions together define a path for guiding a circulating element. The circulating element will repeatedly and alternatingly pass by the first window area and the second window area to momentarily prevent at least a part of said light beam passing through the first window area from reaching the second window area.

## Description

### TECHNICAL FIELD

The present application relates to a device for flow measurement, comprising a housing, a flow changing passage which is provided inside the housing and which has an inlet and outlet, and a measuring section provided between the inlet and the outlet of the flow changing passage.

### BACKGROUND ART

Flow measurements may be implemented in a multitude of different instances. For instance, in manufacturing or processing industries it may be relevant to have control of the flow of a certain fluid flowing through a conduit. Another example is tap water control. A further example is in HVAC applications (heating, cooling, ventilation, and air conditioning), in which for example the temperature in a room or other enclosed space may be controlled in order to provide a comfortable indoor climate. The flow rate of a heating or cooling medium may be regulated by means of one or more valves to achieve the desired effect. Flow measurements may suitably be performed and the results thereof may, for instance, be used as feedback for the regulation of a valve or for calibration of a valve, etc.

EP 3 063 507 A1 discloses a flow meter in which a ball is caused to circulate in a measuring chamber. The speed of the ball is detected and correlated to the speed of the flow. The flow is directed radially inwardly at the measuring chamber where the ball circulates. A drawback with this configuration is that the because of the radially inwardly directed flow, the speed of the flow will be highest in the central parts of the measuring chamber. In contrast, in the peripheral parts of the measuring chamber, the speed of the flow will be lower. A lower speed at the peripheral parts of the measuring chamber increases the risk of dirt accumulating in the periphery of the measuring chamber, which may reduce the accuracy of the measurements or even preventing measurements from being performed.

### SUMMARY OF THE INVENTION

An object of the invention is to at least part alleviate the above-mentioned drawbacks of the prior art. This and other objects, which will become apparent in the following disclosure, are accomplished by a device for flow measurement as defined in the accompanying independent claim. Some non-limiting exemplary embodiments are presented in the dependent claims.

The present invention is based on the realization that by creating a central body configuration not only for guiding the ball (or any other circulating element) in a circular motion, but also for functioning as a guide which rather than forcing the fluid to flow radially inwardly at the circulating path of the ball, instead guides the flow more in an axial direction past the circulating path of the ball. In particular, inventors have realized that the path of the ball may be defined by an upstream central body portion and a downstream central body portion, rather than just being defined by a central body and a housing wall. According to the present disclosure, the downstream central body portion causes the fluid to encircle the downstream central body portion as the fluid flows from the measuring section (where the ball is circulating) to an outlet. The general inventive concept and some exemplary embodiments will now be further discussed below.

According to an aspect of this disclosure, there is provided a device for flow measurement, comprising:
- a housing,
- a flow changing passage which is provided inside the housing and which has a geometrical centre axis defining an axial direction of extension of the flow changing passage, wherein the flow changing passage comprises an inlet through which a fluid is receivable into the flow changing passage and an outlet through which the fluid is enabled to leave the flow changing passage, the outlet being axially separated from the inlet,
- a measuring section provided axially between the inlet and the outlet of the flow changing passage,
   wherein the measuring section is provided with a first window area and a second window area that allow a light beam to pass from outside of and through the first window area, into and across the interior of the housing, and then out through the second window area,
- an upstream central body portion extending axially along the interior of the housing and being provided with a plurality of channels that are inclined relative to the geometrical centre axis in order to direct the fluid flowing from said inlet of the flow changing passage into said measuring section at a non-zero angle relative to said geometrical centre axis, and
- a downstream central body portion extending axially along the interior of the housing and causing the fluid to encircle the downstream central body portion as the fluid flows from the measuring section to said outlet of the flow changing passage,
- a circulating element,
wherein the upstream central body portion and the downstream central body portion together define a path for guiding the circulating element circumferentially around the geometrical centre axis such that, when the circulating element is subjected to the force of the fluid flowing from said inlet via the measuring section to said outlet, the circulating element will repeatedly and alternatingly pass by the first window area and the second window area to momentarily prevent at least a part of said light beam passing through the first window area from reaching the second window area.

By this device, the speed of the flow at the measuring section may be maintained relatively high and thus the accuracy of the measurements may be improved. Furthermore, by allowing the circulating element to circulate at a higher speed, the circulating element itself will also contribute to keeping the window areas clean from dirt.

The circulating element may suitably be a symmetrical circulating element for enabling a smooth and consistent circulation around the geometrical centre axis. For example, the circulating element may be a ball. However, other alternatives are also conceivable, such as a roll.

As explained above, the circulating element will each time it passes the first window area and the second window area momentarily block at least a part of the light beam. In some exemplary embodiments, the circulating element may be dimensioned to block the entire light beam when passing by said window areas. Just to give an illustrative and non-limiting example, the light beam going through the second window area may, for example, be detected by a phototransistor which will output a certain voltage depending on the amount of light detected. In a perfect situation where the circulating element covers 100% of the light, the output from the phototransistor may be 0V, and when there is no obstruction of the light the output may be 5V. It is, of course, advantageous to have as high difference between the high voltage (e.g. 5V) and the low voltage (e.g. 0V) as possible to avoid false detection of pulses. Nevertheless, even if the circulating element does not obstruct the entire light beam, but just a part of it, for example half the light beam, the output voltage (e.g. 2.5V) may still be clearly distinguishable from the high voltage (e.g. 5V) which represents no obstruction.

As explained above the flow changing passage has a geometrical centre axis defining an axial direction of extension of the flow changing passage. In a cylindrical (*r,φ,z*) coordinate system, the centre axis may extend along the axial z-direction, the circulating element may circulate along the circumferential *φ*-direction, and the light beam may be emitted substantially in the radial r-direction (although some offset from the *r-direction* may be conceivable).

The device may suitably be connectable to upstream and downstream pipe sections, or may be connected directly to a valve or other component. To this effect, the device should be installed such that an inlet end of the housing receives fluid from an upstream component and an outlet end of the housing expels water to a downstream component. Suitably, the housing may be provided with external or internal threads, or other suitable connecting elements, for connecting the device to an upstream and a downstream component.

As explained above, the measuring section is provided with a first window area and a second window area to enable a light beam to pass into and across the interior of the housing. By registering the light beam coming through the second window area, and in particular at which rate the light beam is blocked due to the circulation of the circulating element, the flow rate can be calculated for the fluid passing through the device.

It should be understood that the device may, in at least some exemplary embodiments, be provided as a stand-alone unit to which a separate light emitter and light receiver, and thereto connected processing circuitry, may be mounted at the time of measurement. Thus, the light emitter, light receiver, and processing circuitry may be provided as one or more separable components which may temporarily be installed to the device. However, in other exemplary embodiments, a light emitter, a light receiver and a processing circuitry may form an integrated part of the device. In this latter case, the device may suitably be referred to as a flow measuring device. In either one of these exemplary embodiments, the light emitter may suitably be a light emitting diode (LED), although the general inventive concept is not limited to the use of that specific light emitter. For instance, infrared emitters or lasers are other conceivable options. The light receiver may, for example, be or comprise a phototransistor.

It should also be that the first and second window area may represent a window area pair. In at least some exemplary embodiments, there may be two or more such window area pairs, wherein two or more light emitters may emit a respective light beam through the first window areas and the light beams are received by respective light receivers at the second window areas. Using several light emitters and light receivers may improve the resolution of the measurement.

According to at least one exemplary embodiment, the first window area, the second window area and the path defined by the upstream central body portion and the downstream central body portion lie in a common geometrical plane that is perpendicular to said geometrical centre axis, wherein the circulating element moves in said common geometrical plane when subjected to the force of the fluid. By such alignment of the window areas and the path, accurate flow measurements are enabled.

As regards the upstream central body portion and the downstream central body portion which together define the path for guiding the circulating element circumferentially in the measuring section, it may be noted that in some exemplary embodiments they may be formed as one integral component, while in other exemplary embodiments they may be formed as two distinct spaced-apart components. The general working principle is the same in either case. An advantage of having one integral central body component is that only one part is needed to create both the upstream and the downstream central body portions, which may reduce costs. Another advantage is that the variation between production samples may be reduced since the tolerances in creating the path for guiding depends only on tolerances in one single component instead of several components if divided as two spaced-apart components. On the other hand, an advantage of having two distinct spaced-apart components is that the space between the window areas can be designed without any structure that can interfere with the light beam. A benefit of not having any structure in this area is a reduced risk for dirt to build up, which could result in blocking of the light beam.

According to at least one exemplary embodiment, the upstream central body portion and the downstream central body portion may form part of a continuous central body, the upstream central body portion and the downstream central body portion may form part of a continuous central body, wherein the central body further comprises a waist portion formed axially between the upstream and downstream central body portions, wherein the path is also defined by the waist portion. The largest diameter of the waist portion would normally be smaller than the largest diameter of the upstream central body portion and the downstream central body portion. By providing a continuous central body with a waist portion, the transverse dimension of the path can be effectively chosen by selecting an appropriate diameter of the waist portion.

According to at least one exemplary embodiment, such a waist portion may be configured such that a straight imaginary line can be drawn from the first window area to the second window area without being obstructed by the waist portion. This may be achieved in different ways. For instance, if the waist portion is made sufficiently thins, a light beam may pass by on one or both sides of the waist portion. In other exemplary embodiments, the waist portion may be made from a translucent or transparent material allowing the light beam to pass through the waist portion. According to at least a further exemplary embodiment, the waist portion may be provided with a hole for allowing the light beam to pass through the waist portion. This last example, is reflected in the following exemplary embodiment.

According to at least one exemplary embodiment, the waist portion may comprise a through hole extending perpendicularly to the geometrical centre axis and being aligned with the first and second window areas to enable said light beam to pass from the first window area, through the through hole, to the second window area. While the previous other examples of having a relatively thin waist portion or a translucent/transparent waist portion may be rotationally independent, in contrast the exemplary embodiment with a through hole should be properly oriented to obtain a good transmission of the light beam. Therefore, a central body having a waist portion with a through hole to be aligned with the first and second window areas is suitably provided with mounting elements that are guided by the housing so that the central body is installed in the correct rotational orientation. Such mounting elements and matching guide elements may of course be provided for any other exemplary embodiment of the present general inventive concept.

According to at least one exemplary embodiment, at least one of the upstream central body portion and the downstream central body portion is provided with a circular rim which at least partly defines said path, wherein the circulating element circles around the rim when subjected to the force of the flowing fluid. By providing a rim the circulating element may be prevented from escaping its circular trajectory along the path. The rim on one of said central body portions is suitably dimensioned such that it, together with the other body portion, define a circumferential gap which is smaller than the diameter of the circulating element, thereby preventing the circulating element from escaping through the gap. As should be understood, in some exemplary embodiments both the upstream and the downstream central body portions may be provided with a rim extending towards the other central body portion, while in other exemplary embodiments only one of the central body portions is provided with such a rim.

According to at least one exemplary embodiment, at the measuring section, the inner diameter of the housing is smaller than or equal to the inner diameter of the housing at the inlet of the flow changing passage. Because the configuration of the device enables the speed of the flow at the measuring section to be maintained relatively high, a compact arrangement can be made where no widening of the measuring section is required. In contrast, if the flow would be guided radially inwardly at the measuring section, thereby making the speed of the flow slower, such a design may need to be compensated by making a wider measuring section to increase the speed, resulting in a bulkier device overall.

The window areas may be configured in various ways. For instance, a window area may be provided as a local window just covering an opening, pocket or other structure for accommodating a light emitter and/or light receiver. Thus, each window area may comprise distinct individual transparent/translucent elements. In other exemplary embodiments, however, there may be one translucent/transparent element which is common to both window areas. This is at least partly reflected in the following exemplary embodiment.

According to at least one exemplary embodiment, the device further comprises a transparent or translucent tube extending inside of and coaxially with the housing, wherein the housing is provided with a first opening and a second opening, wherein the tube together with the first opening form said first window area and wherein the tube together with the second opening form said second window area. Providing a transparent or translucent tube is advantageous from a manufacturing perspective as it facilitates the assembling of the device. Suitably, sealing rings may be provided both upstream and downstream of the first and second openings and in contact with the tube.

According to at least one exemplary embodiment, said upstream central body portion and said downstream central body portion extend inside said tube. Thus, a substantially straight and uninterrupted periphery may delimit the flow as it passes central body portions.

According to at least one exemplary embodiment, the difference between the inner radius of said tube and the largest radius of the said downstream central body portion is smaller than the diameter of the circulating element, suitably equal to or smaller than the radius of the circulating element. By this dimensional configuration, the circulating element is prevented from escaping and following the flow past the downstream central body portion. By appropriately selecting a gap size between the downstream central body portion and the tube, a suitably balance may be achieved between the flow speed (increases with larger gap size) and the cyclone-enhancing effect (increases with smaller gap size). It may also be noted that a smaller gap (area) gives a higher speed of the circulating element, but also creates a higher differential pressure drop over the flow changing passage. It may be desirable to reduce the pressure drop over the flow changing passage since a higher pressure drop over the flow changing passage requires a higher pump pressure which increases the energy usage of the pump. Thus, this energy affecting aspect may suitably also be taken into account when selecting a gap size.

According to at least one exemplary embodiment, the difference between the inner radius of said tube and the largest radius of the waist portion is larger than the diameter of the circulating element. Thus, the waist portion should be thin enough to allow the circulating element to circulate around the waist portion.

According to at least one exemplary embodiment, the housing is provided with a compartment which holds, or which is configured to hold, a temperature sensor for measuring the temperature of the fluid flow. This is advantageous as it enables a higher accuracy for calculating the flow rate, since measuring the temperature of the fluid allows for compensation for fluid properties that change dependent on the fluid temperature. Examples of such fluid properties are viscosity and density.

According to at least one exemplary embodiment, the circulating element is made of a material having a hardness equal to or less than 95 Shore A, such as 90 Shore A. This is advantageous as a material with such relatively low hardness results in no or less noise compared to a circulating element made of a harder material. The circulating element may, for example, comprise rubber or be made completely out of rubber. However, other materials are also conceivable. For instance, the circulating element may be made of any material with a soft surface and a density close to water (or if another fluid is used instead of water, then the density may be close to the density of that fluid). By providing a circulating element which has a density close to the density of the fluid (e.g. water), the circulation along its path may be more consistent. For instance, if the device is installed in such way that the geometrical centre axis lies horizontally, the circulating element will during its circulation move up and move. In such an installation, if the circulating element has a higher density then the fluid, the upward movement of the circulating element may be slower than the downward movement. In contrast, if the circulating element has a lower density then the fluid, the downward movement may be slower than the upward movement.

According to at least one exemplary embodiment, the housing may be made in one piece. This is advantageous from a manufacturing point of view. The housing may suitably be made of a metal or metal alloy, such as brass. However, other materials are also conceivable, such as a plastic housing. If the housing is made of plastic it may suitably be made in transparent/translucent plastic. In such case, the previously mentioned transparent or translucent tube would be superfluous and may suitably be omitted. The above-exemplified sealing rings may also be omitted.

According to at least one exemplary embodiment, the upstream central body portion is fixed to the housing at the inlet of the flow changing passage. Thus, irrespectively if the upstream central body portion is a separate piece from the downstream central body portion or if it is formed in one piece with the downstream central body portion, its inlet end may suitably be connected to the housing. Thus, no disturbing structures will then be present for the fluid after it has passed the connection interface and then flows along and is guided by the upstream central body portion to the measuring section.

Generally, all terms used in the claims are to be interpreted according to their ordinary meaning in the technical field, unless explicitly defined otherwise herein. All references to "a/an/the part, portion, element, component, arrangement, device, etc." are to be interpreted openly as referring to at least one instance of the part, portion, element, apparatus, component, arrangement, device, etc., unless explicitly stated otherwise. Further features of, and advantages with, the present inventive concept will become apparent when studying the appended claims and the following description. The skilled person realizes that different features of the present inventive concept may be combined to create embodiments other than those described in the following, without departing from the scope of the present inventive concept.

### BRIEF DESCRIPTION OF THE DRAWINGS

Fig. 1 is a cross-sectional view of a device for flow measurement according to at least one exemplary embodiment of the present disclosure.
Fig. 2 is a partly cut-away view of the device in Fig. 1.
Fig. 3 is a partly cut-away view of a device for flow measurement according to at least another exemplary embodiment of the present disclosure.
Fig. 4 is an external perspective view of a device for flow measurement according to at least a further exemplary embodiment.
Fig. 5 illustrates a light measurement arrangement connected to the device in Fig. 4.

### DETAILED DESCRIPTION

The present inventive concept will now be described more fully hereinafter with reference to the accompanying drawings, in which certain aspects of the present inventive concept are shown. The present inventive concept may, however, be embodied in many different forms and should not be construed as limited to the embodiments and aspects set forth herein; rather, the embodiments are provided by way of example so that this disclosure will be thorough and complete, and will fully convey the scope of the invention to those skilled in the art. Accordingly, it is to be understood that the present inventive concept is not limited to the embodiments described herein and illustrated in the drawings; rather, the skilled person will recognize that many changes and modifications may be made within the scope of the appended claims. Like reference numerals refer to like elements throughout the description.

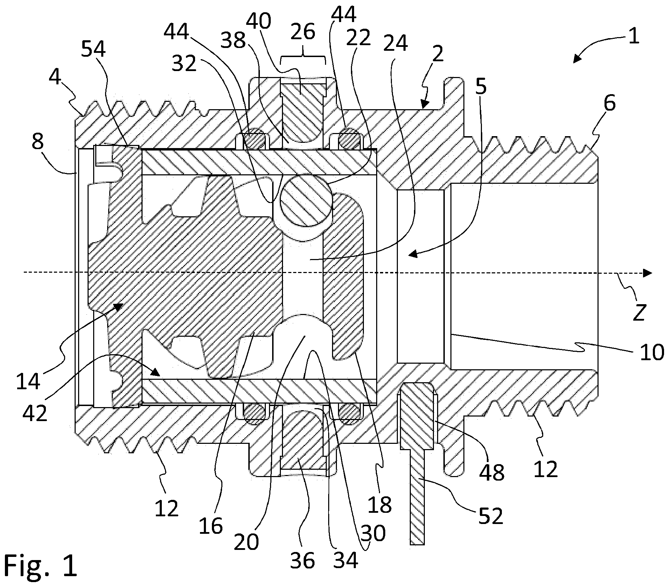

Fig. 1 is a cross-sectional view of a device 1 for flow measurement according to at least one exemplary embodiment of the present disclosure. The device 1 comprises a housing 2. The housing 2 has an inlet end 4 and an outlet end 6. The device 1 also comprises a flow changing passage 5 which is provided inside the housing 2. The flow changing passage 5 comprises an inlet 8 through which fluid is receivable into the flow changing passage 5 and an outlet 10 through which the fluid is enabled to leave the flow changing passage 5. In the present illustration the inlet 8 of the flow changing passage 5 is provided at the inlet end 4 of the housing 2. It should, however, be understood that in other exemplary embodiments, this is not necessarily so. For instance, the housing 2 may be made L-shaped in order to form a connection between an upstream vertical pipe and a downstream horizontal pipe, and the flow changing passage 5 and its inlet 8 may for instance be provided in the horizontal leg of the L-shape, i.e. distanced from the inlet end of the housing at the vertical leg of the L-shape. Similarly, the location of the outlet 10 of the flow changing passage 5 may or may not coincide with the outlet end 6 of the housing 2. Downstream of the outlet 10 of the flow changing passage 5, the available cross-section for the fluid flow may suitably correspond to the available cross-section in a downstream component (e.g. pipe) connected to the device 1.

The flow changing passage 5 has a geometrical centre axis Z defining an axial direction of extension of the flow changing passage 5.

The housing 2 may suitably be made in one piece. The general direction of flow of fluid through the flow changing passage 5 is from its inlet 8 to its outlet 10. The device 1 is thus intended to be install such that fluid is received into the flow changing passage 5 through the inlet 8. The outlet 10, which is axially separated from the inlet 8, enables the fluid to leave the flow changing passage 5 and to flow to a component downstream of the device 1. For installing the device 1, the housing 2 may be provided with appropriate connecting elements, such as external threads 12 as illustrated at the inlet end 4 and the outlet end 6 of the housing 2. The external threads 12 can thus engage mating internal threads provided in a tube, pipe, adapter or any other component through which the fluid flows. The inlet end 4 will be connected to an upstream component, while the outlet end 6 will be connected to a downstream component. The external threads 12 are just shown as an example, and other alternative connecting elements are also conceivable.

A central body 14 extends in the flow changing passage 5, and thus internally of the housing 2, in the axial direction. As illustrated in Fig. 1, the central body 14 may suitably extend co-axially with the flow changing passage 5(i.e. along the geometrical centre axis Z), and in this illustration also co-axially with the housing 2. The central body 14 comprises an upstream central body portion 16 and a downstream central body portion 18. Thus, when the flow enters the inlet 8 it will first pass past the upstream central body portion 16 before reaching the downstream central body portion 18 and then out through the outlet 10. The upstream central body portion 16 and the downstream central body portion 18 together define a path 20 for guiding a circulating element, in this case illustrated as a ball 22, circumferentially around the geometrical centre axis Z. For convenience, in the following discussion of the drawing figures, reference will consistently be made to a ball 22, however, it should be understood that in other exemplary embodiments the device 1 may instead be provided with another type of circulating element, suitably another type of symmetrical circulating element, such as for instance a roll.

As illustrated in Fig. 1, the central body 14 may comprise a waist portion 24 between the upstream central body portion 16 and the downstream central body portion 18. The waist portion 24 has a smaller diameter than the adjacent upstream central body portion 16 and the adjacent downstream central body portion 18.

The path 20 where the ball 22 rotates due to the fluid flow forms part of a measuring section 26 of the device. Thus, the measuring section 26 is provided between the inlet 8 and the outlet 10 of the flow changing passage 5. In this exemplary embodiment, as seen in the axial direction, the measuring section 26 is provided between the upstream central body portion 16 and the downstream central body portion 18.

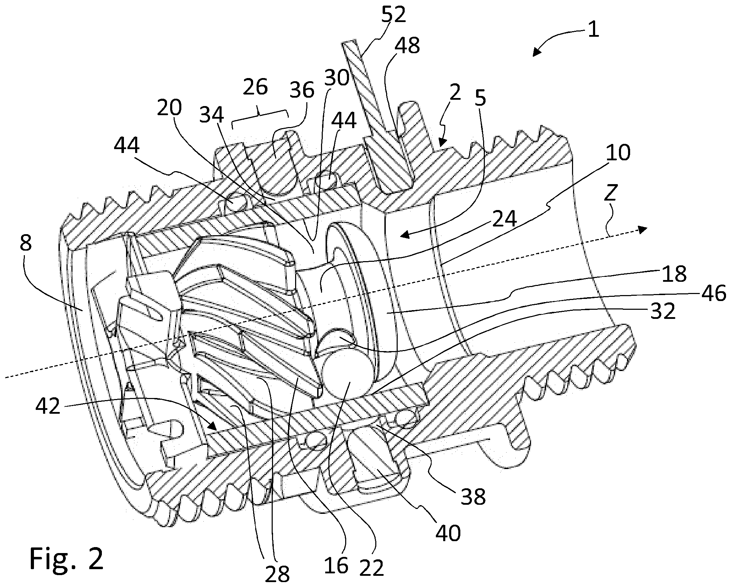

The upstream central body portion 16 extends axially along the interior of the flow changing passage 5 (and in this illustration also axially along the housing 2) and, as clearly seen in Fig. 2, the upstream central body portion 16 is provided with a plurality of channels 28 that are inclined relative to the geometrical centre axis Z in order to direct the fluid flowing from the inlet 8 into the measuring section 26. The helical turning of the channels 28 changes the mainly axial direction of the flow entering the housing 2 into a more swirling flow when reaching the measuring section 26, whereby the ball 22 will be caused to circulate along the path 20 between the upstream and downstream central body portions 16, 18.

With reference to Figs. 1 and 2, the measuring section 26 is provided with a first window area 30 and a second window area 32 that allow a light beam to pass from outside of and through the first window area 30, into and across the interior of the housing 2, and then out through the second window area 32. In this exemplary embodiment, the housing 2 is illustrated as having a first opening 34, pocket or compartment etc. which is configured to receive a light emitter 36, such as a light emitting diode. The housing 2 is also illustrated as having a second opening 38, pocket or compartment etc. which is configured to receive a light receiver 40, such as a phototransistor. It should be understood that the assigned locations for the light emitter 36 and light receiver 40 are only shown as examples. In other examples, the light receiver may instead be held in the first opening 34, and the light emitter may be held in the second opening 38. A transparent or translucent tube 42 is provided at the inner wall of the housing 2. The tube 42 together with the first and second openings 34, 38 form the first window area 30 and the second window area 32. As illustrated, sealing rings 44 may be provided on either side (upstream/downstream) of the window areas 30, 32 to prevent the fluid from reaching the openings 34, 38. Instead of having the illustrated tube 42, another option would be to have local patches of transparent or translucent material that covers the openings 34, 38.

As the ball 22 is subjected to the force of the fluid flowing from the inlet 8 via the measuring section 26 to the outlet 10, the ball 22 will, as it circulates along the path 20, repeatedly and alternatingly pass by the first window area 30 and the second window area 32 to momentarily prevent the light beam (or at least a portion of the light beam) which passes through the first window area 30 from reaching the second window area 32. This will be registered by the light receiver 40 and a connected processing circuitry (not illustrated) will, based on the frequency with which the obstruction of the light is detected by the light receiver 40, calculate the flow of the fluid through the device 1. In Figs. 1 and 2 the ball 22 is illustrated as being in a position in front of the second window area 32 where it would block a light beam coming from the first window area 30. As will be understood the ball will also block the light beam when it has moved half a lap and reached the first window area 30. Thus, for each full circle along the path 20, the ball 22 will interfere with a light beam twice.

The light emitter 36, the light receiver 40 and the processing circuitry may in some exemplary embodiments be provided as separate components, which may be used with this device 1 and other devices for flow measurements. However, in other exemplary embodiments, they may be provided as a complete assembly together with the device 1, in which case they together with the device 1 make up a complete flow measuring device/assembly.

As best seen in Fig. 1 the first window area 30, the second window area 32 and the path 20 defined by the upstream central body portion 16 and the downstream central body portion 18 lie in a common geometrical plane that is perpendicular to said geometrical centre axis Z. The ball 22 moves in this common geometrical plane when subjected to the force of the fluid.

As can be seen in Fig. 2, the waist portion 24 comprises a through hole 46 extending perpendicularly to the geometrical centre axis Z and being aligned with the first and second window areas 30, 32 to enable said light beam to pass from the first window area 30, through the through hole 46, to the second window area 32. Thus, the through hole 46 is one example of configuring the waist portion 24 such that a straight imaginary line can be drawn from the first window area 30 to the second window area 32 without being obstructed by the waist portion 24.

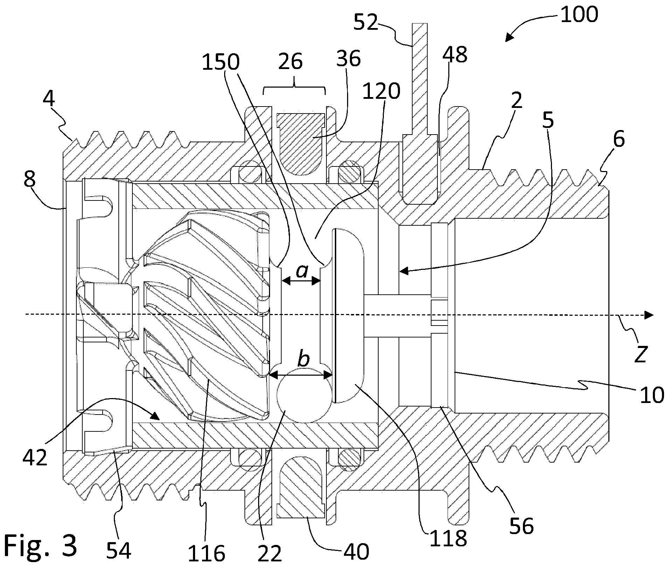

Fig. 3 is a partly cut-away view of a device 100 for flow measurement according to at least another exemplary embodiment of the present disclosure. Instead of a having a central body 14 in one piece as in Fig. 1 and 2, the device 100 in this exemplary embodiment has an upstream central body portion 116 and a downstream central body portion 118 which are two distinct and spaced-apart components. Thus, instead of the waist portion 24 in Figs. 1 and 2, the present exemplary embodiment is illustrated as being void of any structure between the upstream and downstream central body portions 116, 118. Nevertheless, the basic functioning is the same. The upstream and downstream central body portions 116, 118 together define a path 120 for circulating the ball 22. In order to achieve this, the minimum separating distance *a* between the upstream and downstream central body portions 116, 118 is suitably smaller than the diameter of the ball 22, and the maximum separating distance b is suitably larger than the diameter of the ball 22.

As can be seen in both exemplary embodiments of Figs. 1-3, the downstream central body portion 18, 118 extends axially along the flow changing passage 5 and the interior of the housing 2, and causes the fluid to encircle the downstream central body portion 18, 118 as the fluid flows from the measuring section 26 to the outlet 10. This allows for a higher speed of the flow than in the prior art, without needing to widen the measuring section 26 in the radial direction. Indeed, as can be seen in both exemplary embodiments illustrated in Figs. 1-3, at the measuring section 26, the inner diameter of the housing 2 is smaller than or equal to the inner diameter of the housing 2 at the inlet 8. No widening is needed.

By letting the flow pass radially outside of the downstream central body portion 18, 118 one can avoid having a flow which passes with a strong radial flow direction through the measuring section 26 and then axially towards the outlet 10, as such a strong radial flow direction through the measuring section 26 results in a lower flow through the measuring section 26. Instead, with the exemplary embodiments illustrated in Figs. 1-3, and for any other exemplary embodiments of the present inventive concept, such a radially inwardly flow direction at the measuring section 26 may be avoided.

As can be seen in both exemplary embodiments in Figs. 1-3, the upstream central body portion 16, 116 and the downstream central body portion 18, 118 extend inside said tube 42. As illustrated, the difference between the inner radius of the tube 42 and the largest radius of the downstream central body portion 18, 118 may be smaller than the diameter of the ball 22, suitably equal to or smaller than the radius of the ball 22. Hereby, the ball 22 cannot pass the downstream central body portion 18, 118 and be brought along the flow to the outlet 10.

As illustrated in Fig. 3, each one of the upstream central body portion 116 and the downstream central body portion 118 is provided with a respective circular rim 150 which at least partly defines the circular path 120 for the ball 22. The ball 22 will circulate around the rims 150 when subjected to the force of the flowing fluid. In a more general term, at least one of the upstream and downstream central body portions 116, 118 may suitably be provided with such a rim 150. The minimum distance in the axial direction (i.e. along or in parallel with the geometrical centre axis Z) from such a rim 150 of one of the central body portions 116, 118 to the other central body portion 116, 118, is suitably smaller than the diameter of the ball 22, thereby preventing the ball 22 from travelling across the interior of the housing 2 in the radial direction. In the illustrated example of Fig. 3, the minimum distance between the two rims 150 is smaller than the diameter of the ball 22 . Although the rims 150 are shown as having a concave curvature, other shapes of the rim are also conceivable.

With respect to Fig. 3, the distance between the tube 42 and the smallest radial extension of the rim 150 may suitably be larger than the diameter of the ball 22 so as to properly accommodate the ball 22. In the illustrated example in Figs. 1 and 2, the difference between the inner radius of the tube 42 and the smallest radius of the waist portion 24 is larger than the diameter of the ball 22. Furthermore, although not necessary for accommodating the ball 22 between the central body portions 16, 18 in Fig. 2, the difference between the inner radius of the tube 42 and the largest radius of the waist portion 24 may also be larger than the diameter of the ball 22.

As illustrated in both exemplary embodiments of Figs. 1-3, the housing 2 may suitably be provided with a compartment 48 which holds, or which is configured to hold, a temperature sensor 52 for measuring the fluid flow. The temperature sensor 52 may be operatively connected to the same processing circuitry as the light emitter 36 and the light receiver 40, wherein the processing circuitry may in its calculations compensate for the fluid temperature's effect on physical properties such as density and viscosity.

As mentioned before the ball 22 may, for instance, be made of rubber or any other appropriate material, which suitably has a hardness equal to or less than 95 Shore A, such as 90 Shore A.

As can be seen in both exemplary embodiments of Figs. 1-3, the upstream central body portion 16, 116 may suitably be fixed to the housing 2 at the inlet end 4 of the housing 2 (indication by fixation 54). In particular, the upstream central body portion 16, 116 may suitably be fixed to the housing 2 at the inlet 8 of the flow changing passage 5. In the exemplary embodiment of Figs. 1-2, there is no need for a supplementary fixation of the downstream central body portion 18. In the exemplary embodiment of Fig. 3, however, the spaced apart downstream central body portion 118 may be fixed to the housing 2 at a position well-distanced from the measuring portion 26 (as indicated by fixation 56), which position may for example be at the outlet 10 of the flow changing passage 5.

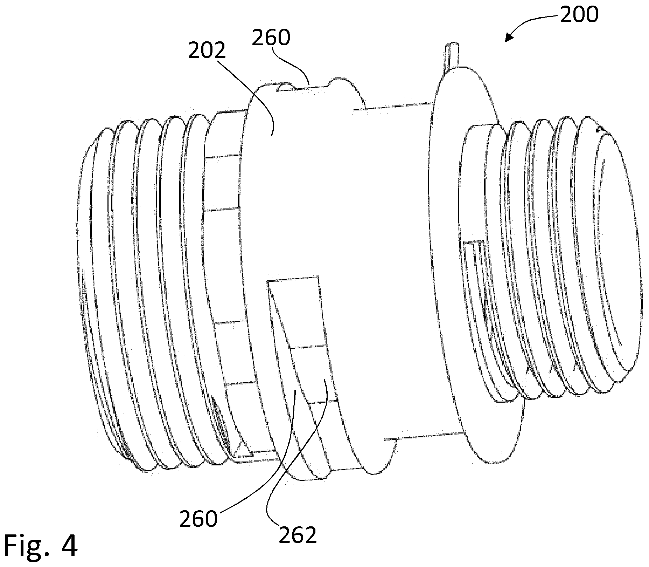

Fig. 4 is an external perspective view of a device 200 for flow measurement according to at least a further exemplary embodiment. Rather than the radially extending openings 34, 38 for accommodating the light emitter 36 and light receiver 40 as discussed in connection with Figs. 1-3, in this exemplary embodiment of Fig. 4, the window areas are achieved by two slots 260 on opposite sides of the housing 202. The slots 260 are towards the interior of the housing 202 delimited by a transparent or translucent material 262, such as the tube 42 discussed in connection with the previous examples, or any other piece of sealing cover that allows a light beam to pass. It should be understood that in other exemplary embodiments, such as variations of those illustrated in Figs. 1-4, the housing 2, 202 itself could be made of a plastic transparent or translucent material. In such case, the tube 42 or any other transparent or translucent material 262, may be omitted, as areas of the housing itself may be used as window areas.

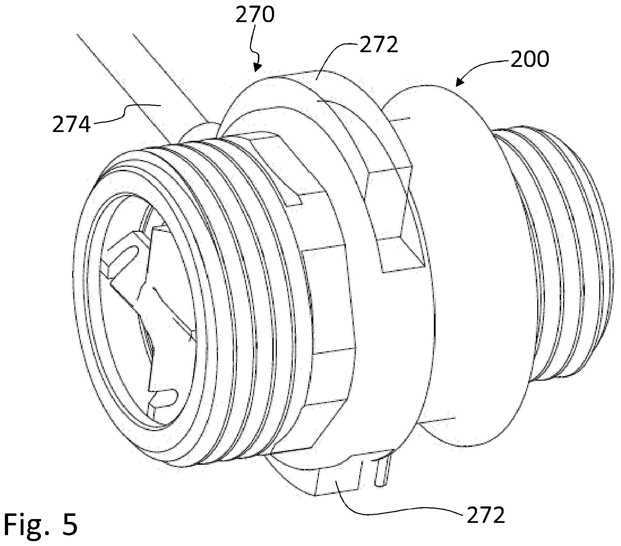

Fig. 5 illustrates a light measurement arrangement 270 connected to the device 200 in Fig. 4. The light measurement arrangement 270 and the device 200, may together form a complete flow measuring device/assembly. The light measurement arrangement 270 is bifurcated, presenting two arms 272, one of the arms 272 holding a light emitter (not shown), while the other arm 272 holds a light receiver (not shown). The arms 272 are configured and dimensioned to match the slots 260 shown in Fig. 4, such that the light emitter and the light receiver will be aligned with the window area presented by the material 262 in Fig. 4.

Continuing with Fig. 5, wirings from the respective arms 272 may extend through a common shaft portion 274 of the light measurement arrangement 270. The wirings are connected to a processing circuitry. Another option would, of course, be wireless communication between light emitter/receiver and processing circuitry. Regardless of wired or wireless communication, the light measuring arrangement 270 functions as a holder which can contain the complete electronics for the flow calculation and may be placed at the device 200 at will.

## Claims

1. A device for flow measurement, comprising:
- a housing,
- a flow changing passage which is provided inside the housing and which has a geometrical centre axis defining an axial direction of extension of the flow changing passage, wherein the flow changing passage comprises an inlet through which a fluid is receivable into the flow changing passage and an outlet through which the fluid is enabled to leave the flow changing passage, the outlet being axially separated from the inlet,
- a measuring section provided axially between the inlet and the outlet of the flow changing passage,
wherein the measuring section is provided with a first window area and a second window area that allow a light beam to pass from outside of and through the first window area, into and across the interior of the housing, and then out through the second window area,
- an upstream central body portion extending axially along the interior of the housing and being provided with a plurality of channels that are inclined relative to the geometrical centre axis in order to direct the fluid flowing from said inlet of the flow changing passage into said measuring section at a non-zero angle relative to said geometrical centre axis, and
- a downstream central body portion extending axially along the interior of the housing and causing the fluid to encircle the downstream central body portion as the fluid flows from the measuring section to said outlet of the flow changing passage,
- a circulating element,
wherein the upstream central body portion and the downstream central body portion together define a path for guiding the circulating element circumferentially around the geometrical centre axis such that, when the circulating element is subjected to the force of the fluid flowing from said inlet via the measuring section to said outlet, the circulating element will repeatedly and alternatingly pass by the first window area and the second window area to momentarily prevent at least a part of said light beam passing through the first window area from reaching the second window area.

2. The device as claimed in claim 1, wherein the first window area, the second window area and the path defined by the upstream central body portion and the downstream central body portion lie in a common geometrical plane that is perpendicular to said geometrical centre axis, wherein the circulating element moves in said common geometrical plane when subjected to the force of the fluid.

3. The device as claimed in any one of claims 1-2, wherein the upstream central body portion and the downstream central body portion are two distinct and spaced-apart components.

4. The device as claimed in any one of claims 1-2, wherein the upstream central body portion and the downstream central body portion form part of a continuous central body, wherein the central body further comprises a waist portion formed axially between the upstream and downstream central body portions, wherein said path is also defined by the waist portion.

5. The device as claimed in claim 4, wherein the waist portion is configured such that a straight imaginary line can be drawn from the first window area to the second window area without being obstructed by the waist portion.

6. The device as claimed in any one of claims 4-5, wherein the waist portion comprises a through hole extending perpendicularly to the geometrical centre axis and being aligned with the first and second window areas to enable said light beam to pass from the first window area, through the through hole, to the second window area.

7. The device as claimed in any one of claims 1-6, wherein at least one of the upstream central body portion and the downstream central body portion is provided with a circular rim which at least partly defines said path, wherein the circulating element circles around the rim when subjected to the force of the flowing fluid.

8. The device as claimed in any one of claims 1-7, wherein, at the measuring section, the inner diameter of the housing is smaller than or equal to the inner diameter of the housing at the inlet of the flow changing passage.

9. The device as claimed in any one of claims 1-8, further comprising a transparent or translucent tube extending inside of and coaxially with the housing, wherein the housing is provided with a first opening and a second opening, wherein the tube together with the first opening form said first window area and wherein the tube together with the second opening form said second window area.

10. The device as claimed in claim 9, wherein said upstream central body portion and said downstream central body portion extend inside said tube.

11. The device as claimed in any one of claims 9-10, wherein the difference between the inner radius of said tube and the largest radius of the said downstream central body portion is smaller than the diameter of the circulating element, suitably equal to or smaller than the radius of the circulating element.

12. The device as claimed in any one of claims 7-9, wherein the difference between the inner radius of said tube and the largest radius of the waist portion is larger than the diameter of the circulating element.

13. The device as claimed in any one of claims 1-12, wherein the housing is provided with a compartment which holds, or which is configured to hold, a temperature sensor for measuring the temperature of the fluid flow.

14. The device as claimed in any one of claims 1-13, wherein the circulating element is made of a material having a hardness equal to or less than 95 Shore A, such as 90 Shore A.

15. The device as claimed in any one of claims 1-14, wherein the housing is made in one piece.

16. The device as claimed in any one of claims 1-15, wherein the upstream central body portion is fixed to the housing at the inlet of the flow changing passage.
